# EUROPÄISCHE PATENTSCHRIFT

(11) **EP 0 880 031 B1**
(45) Veröffentlichungstag und Bekanntmachung des Hinweises auf die Patenterteilung: **19.05.1999**
(21) Anmeldenummer: 98102699.0
(22) Anmeldetag: 17.02.1998
(51) Int. Cl.: G01S 5/10, G01S 5/12, H04B 7/185, H04B 10/105

(54) **Navigationssatellitensystem**
Satellite Navigation System
Système de navigation par satellite

(30) Priorität: 24.05.1997 CH 1210/97
(43) Veröffentlichungstag der Anmeldung: 25.11.1998
(73) Patentinhaber: OERLIKON CONTRAVES AG, 8050 Zürich (CH)
(72) Erfinder: Czichy, Reinhard Hanno, Dr. rer. nat., 9034 Eggersriet (CH)
(74) Vertreter: Hotz, Klaus, Dipl.-El.-Ing./ETH

(56) Entgegenhaltungen:
- EP-A- 0 528 090
- EP-A- 0 601 293
- WO-A-96/16489
- US-A- 5 515 062
- GIGGENBACH D: "OPTISCHE KOMUNIKATION IM WELTRAUM" FUNKSCHAU, Bd. 68, Nr. 2, 5. Januar 1996, Seiten 68-70, XP000554686
- MITSUO NOHARA ET AL: "A LINK STUDY OF A LOW-EARTH ORBIT SATELLITE COMMUNICA-TIONS SYSTEM USING OPTICAL INTERSATELLITE LINKS" IEICE TRANSACTIONS ON COMMUNICATIONS, Bd. E76-B, Nr. 5, 1. Mai 1993, Seiten 536-543, XP000381142
- DREISEWERD D W ET AL: "A GEO TO GEO HIGH DATA RATE OPTICAL CROSSLINK APPROACH (U)" COMMUNICATIONS - FUSING COMMAND, CONTROL AND INTELLIGENCE, SAN DIEGO, OCT. 11 - 14, 1992, Bd. 1 - 2 - 03, 11. Oktober 1992, Seiten 183-187, XP000346725 INSTITUTE OF ELECTRICAL AND ELECTRONICS ENGINEERS

## Beschreibung

Die vorliegende Erfindung betrifft ein Verfahren zur Errichtung eines Satelliten-Navigationssystems nach dem Oberbegriff des Patentanspruchs **1**.

Bestehende Satelliten-Navigationssysteme wie z.B GPS (Global Positioning System), GLONASS oder geplante europäische Systeme (GNSS) sind mittels spezieller Konstellationen mehrerer auf polaren Bahnen um die Erde laufender Satelliten oder auf geostationären Bahnen umlaufender Satelliten realisiert oder geplant. Das geplante europäische System GNSS könnte z. B. durch Einbeziehung der auf geostationären Umlaufbahnen vorhandenen Satelliten des INMARSAT-Netzes implementiert werden. Die Satelliten des GPS-Systems bewegen sich auf polaren Umlaufbahnen in etwa 20'000 km Höhe über dem Erdboden und senden je nach Nutzergruppe auf einer oder zwei Frequenzen im Bereich zwischen 1 und 2 Ghz Funksignale aus, die mittels permanent wiederholter Modulation mit einer sehr breitbandigen Datensequenz grosser Länge exakte Zeitmarken zum auf dem Erdboden befindlichen Nutzer übertragen. Das Spektrum dieser Funksignale erweckt in der näheren Umgebung ihrer jeweiligen Mittenfrequenz aufgrund des sehr breitbandigen Modulationssignals und der relativ niedrigen Rate seiner Wiederholung den Eindruck weissen Rauschens. Da das Funksignal in seiner Phase moduliert ist, lässt es sich im Empfänger mittels negativer Modulation mit demselben, durch seine besondere Struktur sehr leicht reproduzierbaren Modulationssignal in den unmodulierten Zustand zurückversetzen und mittels eines sehr schmalbandigen Filters rauscharm detektieren.

Die hierzu erforderliche Synchronisation des zweiten Modulationsprozesses im Empfänger ermöglicht die Bestimmung von Entfernungen zu mehreren gleichzeitig zu empfangenden Satelliten mit jeweils bekanntem augenblicklichem Aufenthaltsort und damit in Analogie zu Hyperbel-Navigationsverfahren die genaue Standortbestimmung des Nutzers.

Durch den Betrieb auf zwei verschiedenen Frequenzen ergibt sich bei einer entsprechend ausgerüsteten Gruppe von Nutzern eine Kompensation von Fehlern, die durch die sich in ihrer Struktur im Laufe eines Sonnenfleckenzyklusses in einer Periode von etwa 11 Jahren wandelnden sowie sich jahreszeitlich und täglich ändernden Eigenschaften der die Erde umgebenden lonossphäre entstehen (Lambert Wanninger, Der Einfluss der lonosphäre auf die Positionierung mit GPS, Universität Hannover, 1994, ISSN 0174- 1454).

Weiterhin werden vom Betreiber (US Airforce) mutwillig Fehler erzeugt, um die Verwendung handelsüblicher Empfänger beispielsweise zur schnellen und bequemen Einrichtung von Geschützstellungen auszuschliessen. Folglich haben alle übrigen parallel existierenden und geplanten Systeme mit Satelliten auf höheren Umlaufbahnen den hauptsächlichen Zweck, das Monopol eines einzigen Systems zu brechen und weltweite hochgenaue Ortung unabhängig von poltischen oder militärischen Randbedingungen zur Verfügung zu stellen.

Die genannten Systeme arbeiten nichtkooperativ, es besteht keine bidirektionale Verbindung zwischen den Satelliten und dem einzelnen Nutzer der Systeme, daher ist die Zahl der Teilnehmer unbegrenzt und bei voller Funktionsfähigkeit des Systems auch unkontrollierbar. Die durch die hohen Umlaufbahnen der entsprechenden Satelliten gewährleistete gute Sichtbarkeit der Satelliten macht es möglich, deren Anzahl für eine Bedeckung der gesamten Erdoberfläche gering zu halten, für GPS genügen 21 in Betrieb befindliche Satelliten. Allerdings ist es schwer möglich, die Benutzbarkeit des Systems in eng umgrenzten Regionen der Welt selektiv auszuschliessen, um dessen Integration in den optimierten Betrieb von militärischen Systemen zu vereiteln. Weiterhin ermöglicht ein mittels auf relativ hohen Umlaufbahnen vorhandenen Satelliten betriebenes hypothetisches System mit kooperativer Ortung zwecks Kontrolle unerwünschter Nutzung bei bestehender Frequenzknappheit nur eine eingeschränkte Zahl von Nutzern.

Aus der WO-96 16489 A ist ferner eine Einrichtung eines geo-synchronen Satellitennetzwerkes bekannt.

Ein Verfahren der eingangs genannten Art ist aus der Publikation 'Optische Kommunikation im Weltraum' , Band 68, Nr. 2 vom 5. Januar 1996, Seiten 68 bis 70, von D. Giggenbach, bekannt. Es handelt sich hierbei um die Strahlnachführung zur Aufrechterhaltung der optischen Kommunikationsstrecke während sich die kommunizierenden Satelliten relativ zueinander bewegen. Bei Giggenbach geht es um die Ermittlung der relativen Position bzw. der Raumwinkel, unter denen eine optische Verbindung zwischen zwei Satelliten aufrecht erhalten werden kann, wobei auch relativistische Effekte eine Rolle spielen.

Es ist die Aufgabe der Erfindung, Nachteile des Stands der Technik zu vermeiden und die Funkortung von Nutzern eines LEO-Kommunikationsnetzes zu unterstützen.

Die Lösung dieser Aufgabe erfolgt gemäss der Erfindung durch ein Verfahren mit den kennzeichnenden Merkmalen des Anspruchs **1**.

Grundgedanke der vorliegenden Erfindung ist also die Einbeziehung von bereits bekannten und bestehenden Nachrichtenverbindungen zwischen Satelliten, welche in LEO (Low Earth Orbiting) Satellitenkommunikationsnetzen und benachbarten Netzen wegen der eingeschränkten Sichtbarkeit der Satelliten zwingend notwendig sind. Letztere gestattet aber andererseits das Zerlegen des vom System abgedeckten Teils der Erdoberfläche in zahlreiche kleine Zellen, ohne dass aufwendige Antennen an Bord der zahlreichen Satelliten des System nötig wären. Die freie Strecke zwischen einen Satelliten und dem Teilnehmer ist verhältnismässig kurz und erlaubt die Verwendung von Endgeräten mit niedriger Strahlungsleistung. Bei entsprechend dichter Folge von Satelliten auf zahlreichen niedrigen Umlaufbahnen kann jeder Teilnehmer gleichzeitig in Kontakt zu mehreren Satelliten treten und ebenso wie im GPS-System seine Position bestimmen, wobei im Unterschied zu diesem System weniger hochwertige Zeitnormale an Bord der Satelliten nötig sind, da diese sich über die Nachrichtenverbindungen zwischen den Satelliten des Systems gegenseitig mitteln können. Bei Verwendung optischer Nachrichtenverbindungen zwischen den Satelliten kann neben der genauen Entfernungsbestimmung auch eine genaue Er-mittlung der Richtung der als Gegenstationen arbeitenden Satelliten durchgeführt werden. Die damit bekannten Relativpositionen der Satelliten zueinander ermöglichen eine genauere Positionsbestimmung des Teilnehmers. Infolge der bekannten Relativpositionen von mit dem Teilnehmer in Verbindung stehenden Satelliten können zudem von diesem abgestrahlte Signale oder aus diesen extrahierte Merkmale nach deren Empfang in mehreren Satelliten über die Nachrichtenverbindungen zwischen den Satelliten unter Verwendung der bekannten Verzögerungen einem zentralen Ort zugeführt werden, in dem die Berechnung der Position des Teilnehmers erfolgt. Weiterhin können optische Nachrichtenverbindungen zu geostationär umlaufenden Satelliten zu einer Vergrösserung der Messbasis und damit zur Steigerung der Genauigkeit führen. Es können auch auf mittleren Höhen oder geostationär umlaufende Satelliten mit dem erfindungsgemässen Verfahren zur Errichtung eines kooperativ oder nichtkooperativ arbeitenden Navigationssystems verwendet werden.

Als Vorteil der neuen Systeme gegenüber dem Stand der Technik ergibt sich die Möglichkeit des gegenseitigen Vergleichs der in den Satelliten mitgeführten Zeitnormale sowie die gegenseitige Bestimmung der relativen Positionen aller in das System einbezogenen Satelliten zueinander und somit die genauere Bestimmung der Bahndaten, wodurch sich für nichtkooperative Ortungsverfahren eine erhöhte Genauigkeit ergibt.

Ein weiterer Vorteil des Grundprinzips besteht in der Möglichkeit der Anwendung kooperativer Ortungsverfahren. Hierbei besteht für den Teilnehmer an einem satellitengestützten Mobilfunknetz der Vorteil, seine Position durch laufzeitgestützte Verarbeitung des von ihm ausgesendeten Signals an Bord der untereinander vernetzten Satelliten, welche sein Signal empfangen und über optische Nachrichtenverbindungen zusammengeführt haben, ermitteln lassen zu können, ohne über besondere Vorrichtungen zur Positionsbestimmung verfügen zu müssen. Ein Vorteil von durch das erfindungsgemässe Konzept erst ermöglichten Satellitennavigationssystemen, welche aus in niedriger Umlaufbahn positionierten Satelliten bestehen, liegt in der potentiell hohen Zahl kooperativ ortender Teilnehmer sowie in der lokalen Begrenzbarkeit der Nutzung nichtkooperativ arbeitender Ortungsverfahren.

Weitere Einzelheiten, Merkmale und Vorteile der Erfindung ergeben sich nicht nur aus den Ansprüchen und diesen zu entnehmenden Merkmalen -für sich und/oder in Kombination-, sondern auch aus der nachfolgenden Beschreibung eines bevorzugten Ausführungsbeispiels.

Es zeigen:
- **Fig. 1**: das TELEDESIC-Netz als Beispiel eines LEO-(Low Earth Orbiting)-Satelliten netzes,
- **Fig. 2**: die Darstellung einer durch direkte optische Verbindungen vernetzten Gruppe des TELEDESIC-Netzes,
- **Fig. 3**: den Bereich der Sichtbarkeit eines Satelliten für den erdgebundenen Teilnehmer, und
- **Fig. 4**: die Erfassung eines in einer Zelle eines Satelliten-Kommunikationsnetzes befindlichen Teilnehmers durch mehrere aufeinanderfolgende Satelliten des Netzes.

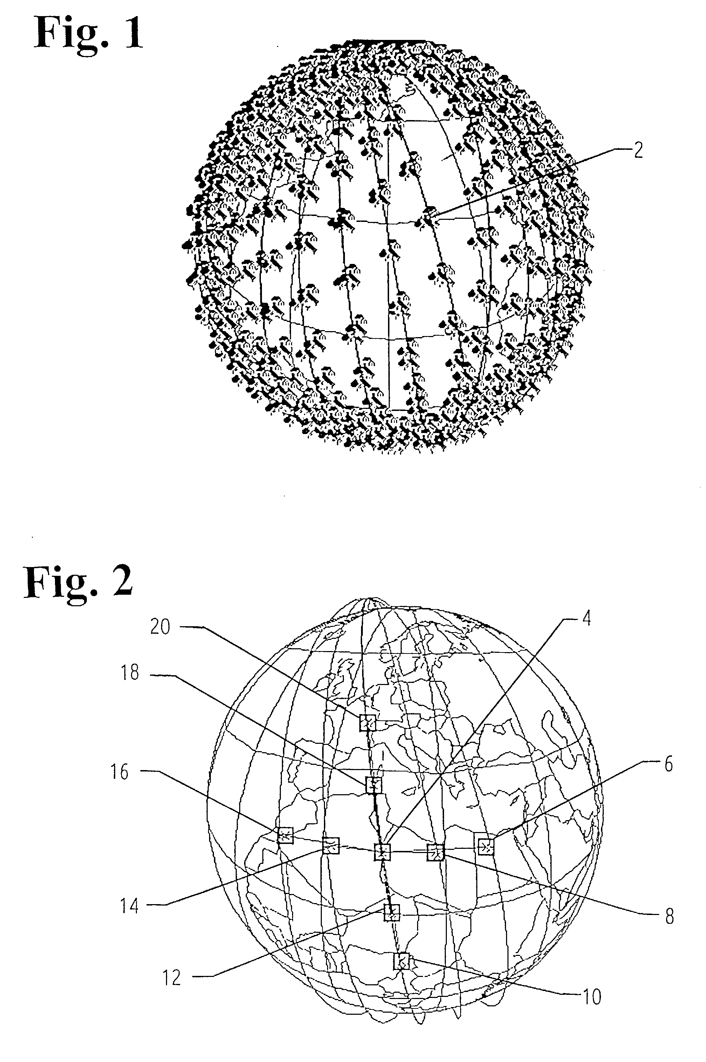

**Fig. 1** zeigt ein mögliches Satelliten-Kommunikationsnetz (TELEDESIC-Projekt), welches aus 840 Satelliten 2 besteht, die in zahreichen polnahen Umlaufbahnen die Erde umkreisen. Hierbei sind die Satelliten einer in **Fig. 2** dargestellten aus Satelliten **4-20** bestehenden Gruppe direkt über optische Nachrichtenverbindungen mit einem zentralen Satelliten **4** verbunden. Über das gesamte Netz hinweg erfolgt der Informationstransport durch Weiterreichung zwischen in **Fig. 2** exemplarisch dargestellten aus mehreren Satelliten **4-20** bestehenden Netzelementen.

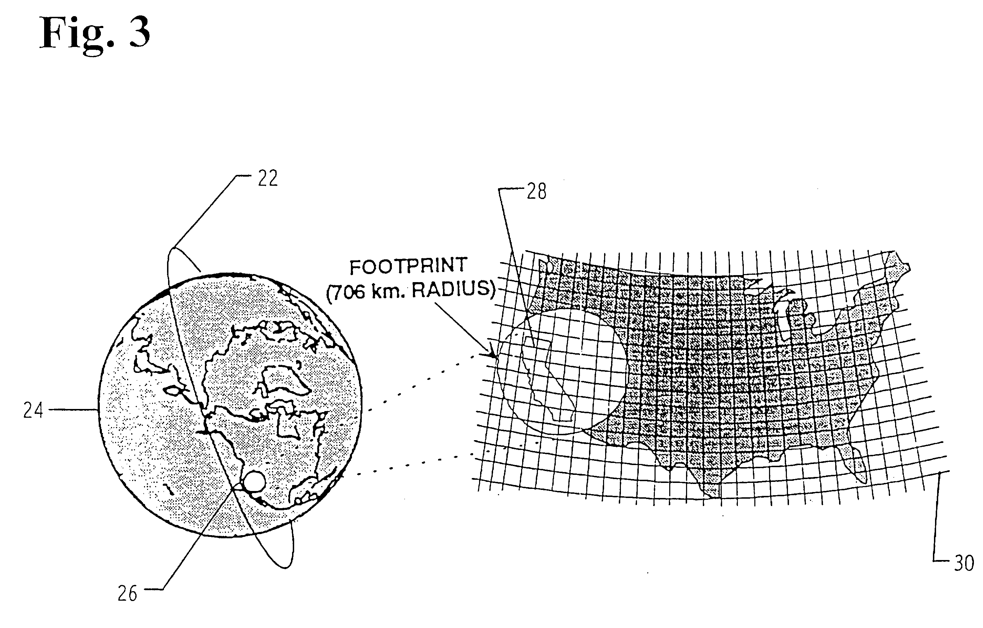

In **Fig. 3** ist in zwei Ausschnitten ein Bereich **28** zu sehen, in welchem ein sich auf einer Umlaufbahn **22** um die Erde **24** bewegender Satellit **26** für einen erdgebundenen Teilnehmer erreichbar ist. Ein Gitter **30** erstreckt sich in den Bereich **28** im rechten Teil von **Fig. 3** und verdeutlicht, dass ein einzelner Satellit mehrere Zellen des Funknetzes erreichen kann. Umgekehrt sind durch einen Teilnehmer innerhalb einer solchen Zelle immer mehrere Satelliten sichtbar, welche jeweils mehrere Zellen des Netzes durch Richtantennen oder spezielle Multiplexierungsverfahren getrennt bedienen. Für ein Navigationssystem kann allgemein der zu ermöglichende gleichzeitige Kontakt mit mehreren Satelliten genutzt werden.

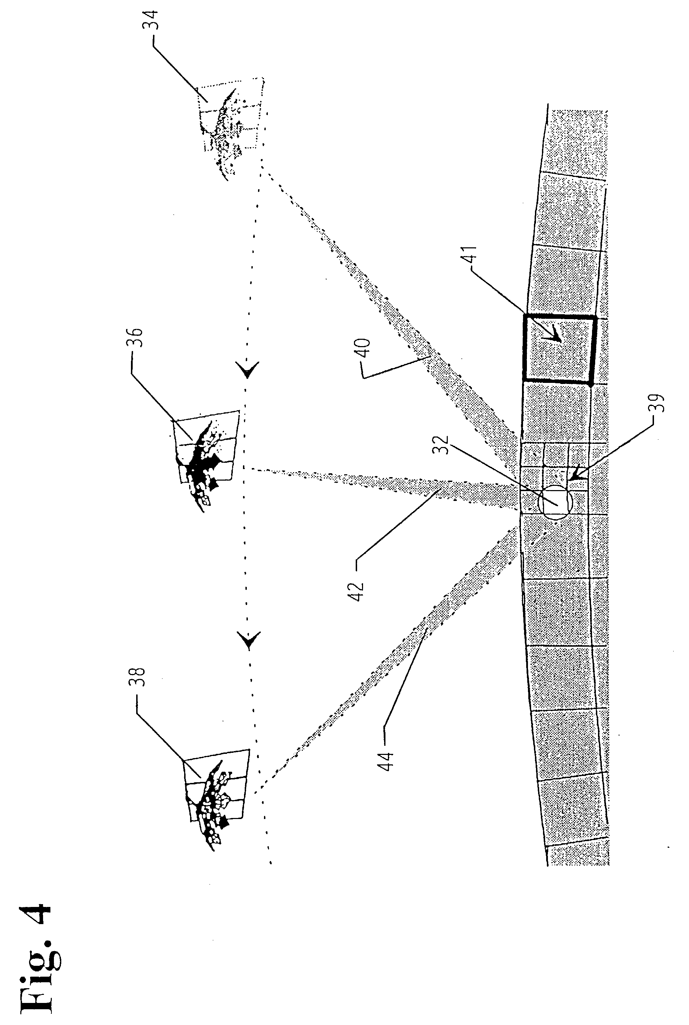

**Fig. 4** zeigt die gleichzeitige Erfassung eines sich in einer Zelle **32** befindlichen Teilnehmers durch die hintereinander in einer Umlaufbahn fliegenden Satelliten **34**, **36** und **38** mittels unterschiedlich ausgerichteter Strahlung **40, 42** und **44**. Es können aber auch in unterschiedlichen Umlaufbahnen fliegende Satelliten gleichzeitig erfasst werden. In Analogie zu nichtkooperativen Ortungsverfahren wie GPS und GLONASS werden von allen Satelliten **34, 36** und **38** mit Zeitmarken behaftete Signale zum Teinehmer geschickt, der autonom entsprechende ortsabhängige Laufzeitunterschiede interpretiert. Umgekehrt kann ein Teilnehmer in einem kooperativen Verfahren seine in den Satelliten **34, 36** und **38** zu verschiedenen Zeitpunkten eintreffenden Signale über optische Nachrichtenverbindungen zwischen den Satelliten **34, 36** und **38** auf einen der Satelliten zusammenführen lassen, um unter Verwendung der durch Messung bekannten Laufzeiten zwischen den Satelliten ortsabhängige Laufzeitunterschiede analysieren zu lassen. Hierbei sind keine besonderen Vorrichtungen seitens des Teilnehmers erforderlich. Ein für Ortungszwecke einsetzbares Netz kann auch aus in mittleren Höhen über der Erde befindlichen Satelliten oder teiweise aus geostationär umlaufenden Satelliten bestehen. Weiterhin können die Satelliten des Netzes sich auf die nichtkooperative Nutzung eines bestehenden Navigationssystems abstützen, um die kooperative Ortsbestimmung der Teilnehmer zu unterstützen.

## Patentansprüche

1. Verfahren zur Errichtung eines Satelliten-Navigationssystems
- unter Verwendung von für Mobilkommunikation vorgesehenen Satellitennetzen unterhalb der GEO-stationären Bahn, insbesondere auf LEO- oder MEO-Bahnen,
- sowie seine Anbindung an Kommunikationssatelliten in der geostationären Bahn.
- bei welchem Verfahren mehrere mit optischen Nachrichtenverbindungen kommunizierende, vernetzte Satelliten zur Navigation eingesetzt werden,
**dadurch gekennzeichnet, dass**
- Laufzeitmessungen der für die optischen Nachrichtenverbindungen zwischen den Satelliten eingesetzten optischen Mittel zur Bestimmung der relativen Position der Satelliten zueinander verwendet werden und dass
- die Bestimmung der Position der Teilnehmer durch die auf niedrigen Umlaufbahnen befindlichen Satelliten unter Verwendung eines nichtkooperativen Ortungsverfahrens durchgeführt wird, wobei durch die eingeschränkte Sichtbarkeit dieser Satelliten das Navigationssystem geographisch selektiv nutzbar ist.

2. Verfahren zur Errichtung eines Satelliten-Navigationssystems nach Anspruch **1**,
**dadurch gekennzeichnet, dass**
die Richtschärfe der für die optischen Nachrichtenverbindungen zwischen den Satelliten eingesetzten optischen Mittel zur genauen Bestimmung der relativen Position der Satelliten zueinander verwendet werden.

3. Verfahren zur Errichtung eines Satelliten-Navigationssystems nach Anspruch **1**,
**dadurch gekennzeichnet, dass**
an Bord der Satelliten mitgeführte Zeitnormale durch Kommunikation zwischen den Satelliten über die optischen Nachrichtenverbindungen gegenseitig geeicht werden.

4. Verfahren zur Errichtung eines Satelliten-Navigationssystems nach Anspruch **1**,
**dadurch gekennzeichnet, dass**
von einem Teilnehmer abgestrahlte Signale von mehreren Satelliten empfangen und über die optischen Nachrichtenverbindungen zwischen den Satelliten auf einem Satelliten zusammengeführt werden, um mittels kooperativer Ortungsverfahren die Position des Teilnehmers zu bestimmen.

5. Verfahren nach Anspruch **4**,
**dadurch gekennzeichnet, dass**
die abgestrahlten Signale als Zeitmarken detektierbare Merkmale umfassen.

6. Verfahren zur Errichtung eines Satelliten-Navigationssystems nach Anspruch **4**,
**dadurch gekennzeichnet, dass**
weitere optische Nachrichtenverbindungen zu geostationär umlaufenden Satelliten zur Bestimmung der Position von mit Teilnehmern kooperativ oder nichtkooperativ operierenden Satelliten verwendet werden.

7. Verfahren zur Errichtung eines Satelliten-Navigationssystems nach Anspruch **6**,
**dadurch gekennzeichnet, dass**
die Position der mit den Teilnehmern kooperativ oder nichtkooperativ operierenden Satelliten mittels bestehender Navigationssysteme bestimmt wird.

8. Verfahren zur Errichtung eines Satelliten-Navigationssystems nach einem der Ansprüche **4** bis **7**,
**dadurch gekennzeichnet, dass**
Zeit- und Frequenznormale bestehender Navigationssysteme in den Satelliten des Satelliten-Navigationssytems zur kooperativen oder nichtkooperativen Ortung der Teilnehmer verwendet werden.

9. Verfahren zur Errichtung eines Satelliten-Navigationssystems nach einem der Ansprüche **1** bis **7**,
**dadurch gekennzeichnet, dass**
Zeit- und Frequenznormale bestehender Navigationssysteme in den Satelliten des Satelliten-Navigationssytems zur Eichung bordeigener Zeit- und Frequenznormale verwendet werden.

10. Verfahren zur Errichtung eines Satelliten-Navigationssystems nach einem der vorangehenden Ansprüche,
**dadurch gekennzeichnet, dass**
eine nichtkooperative Ortung in Systemen mit auf niedrigen Umlaufbahnen befindlichen Satelliten durch den Teilnehmer mittels Beobachtung der Dopplerfrequenzverschiebung der geeichten Signale von mit einer hohen Rate auf verschiedenen Umlaufbahnen den Erfassungsbereich des Teilnehmers passierenden Satelliten erfolgt.

## Claims

1. Method for establishing a satellite navigation system
- using satellite networks provided for mobile communication below the GEO-stationary orbit, in particular on LEO or MEO orbits,
- and the linking-in thereof with communication satellites in the geostationary orbit,
- said method involving the use, for navigation, of a plurality of networked satellites communicating with optical communication links,
**characterised in that**
- delay measurements of the optical means employed for the optical communication links between the satellites are used to determine the relative position of the satellites to one another, and
- the determination of the position of the participants by the satellites on low orbits is carried out using a non-cooperative position-finding process, the limited visibility of these satellites making the navigation system usable on a geographically selective basis.

2. Method for establishing a satellite navigation system according to claim 1,
**characterised in that**
the directional sharpness of the optical means employed for the optical communication links between the satellites is used to accurately determine the relative position of the satellites to one another.

3. Method for establishing a satellite navigation system according to claim 1,
**characterised in that**
time standards carried on board the satellites are mutually calibrated by communication between the satellites via the optical communication links.

4. Method for establishing a satellite navigation system according to claim 1,
**characterised in that**
signals emitted by one participant are received by a plurality of satellites and via the optical communication links between the satellites are aggregated on one satellite in order to determine the position of the participant by means of cooperative position-finding processes.

5. Method according to claim 4,
**characterised in that**
the emitted signals incorporate detectable features as time markers.

6. Method for establishing a satellite navigation system according to claim 4,
**characterised in that**
additional optical communication links to satellites travelling on geostationary orbits are used to determine the position of satellites operating cooperatively with participants or non-cooperatively.

7. Method for establishing a satellite navigation system according to claim 6,
**characterised in that**
the position of the satellites operating cooperatively with the participants or non-cooperatively is determined by means of existing navigation systems.

8. Method for establishing a satellite navigation system according to any of claims 4 to 7,
**characterised in that**
time and frequency standards of existing navigation systems are used in the satellites of the satellite navigation system for cooperative or non-cooperative position-finding of the participants.

9. Method for establishing a satellite navigation system according to any of claims 1 to 7,
**characterised in that**
time and frequency standards of existing navigation systems are used in the satellites of the satellite navigation system for calibrating on-board time and frequency standards.

10. Method for establishing a satellite navigation system according to one of the preceding claims,
**characterised in that**
non-cooperative position-finding in systems having satellites on low-level orbits is carried out by the participant by means of observation of the doppler frequency shift of the calibrated signals of satellites passing through the detection range of the participant at a high rate on different orbits.

## Revendications

1. Procédé de mise en oeuvre d'un système de navigation par satellites
- faisant appel à des réseaux de satellites prévus pour la communication de postes mobiles, placés en dessous d'un orbite GEO-stationnaire, en particulier placés sur des orbites LEO ou MEO,
- ainsi que son rattachement à des satellites de communication placés sur un orbite géostationnaire,
- procédé dans lequel on utilise, pour la navigation, plusieurs satellites mis en réseau, communiquant les uns avec les autres par liaisons optiques de transmission des informations,
caractérisé en ce que
- des mesures de la durée de parcours des moyens optiques utilisés pour les liaisons optiques de transmission des informations entre les satellites sont employées pour déterminer les positions relatives des satellites les uns par rapport aux autres, et en ce que
- la détermination de la position des correspondants est réalisée par les satellites placés sur des orbites à basse altitude, en utilisant un procédé de repérage non-coopératif, le système de navigation pouvant être employé de façon géographiquement sélective grâce à la visibilité limitée de ces satellites.

2. Procédé de mise en oeuvre d'un système de navigation par satellites selon la revendication 1, caractérisé en ce que l'acuité directionnelle des moyens optiques utilisés pour la liaison optique de transmission des informations entre les satellites est employée pour déterminer avec précision la position relative des satellites les uns par rapport aux autres.

3. Procédé de mise en oeuvre d'un système de navigation par satellites selon la revendication 1, caractérisé en ce que des bases de temps embarquées à bord des satellites s'étalonnent les unes les autres par l'intermédiaire d'une communication entre les satellites via les liaisons optiques de transmission des informations.

4. Procédé de mise en oeuvre d'un système de navigation par satellites selon la revendication 1, caractérisé en ce que des signaux émis par un correspondant sont reçus par plusieurs satellites et sont regroupés sur un satellite, via les liaisons optiques de transmission des informations entre les satellites, afin de déterminer la position du correspondant au moyen de procédés coopératifs de repérage.

5. Procédé selon la revendication 4, caractérisé en ce que les signaux émis comportent des caractères pouvant être détectés en tant que marqueurs de temps.

6. Procédé de mise en oeuvre d'un système de navigation par satellites selon la revendication 4, caractérisé en ce que d'autres liaisons optiques de transmission des informations vers des satellites en orbite géostationnaire sont utilisées pour déterminer la position de satellites qui travaillent de façon coopérative ou non coopérative avec des correspondants.

7. Procédé de mise en oeuvre d'un système de navigation par satellites selon la revendication 6, caractérisé en ce que la position des satellites qui travaillent de façon coopérative ou non coopérative avec des correspondants, est déterminée au moyen de systèmes de navigation existants.

8. Procédé de mise en oeuvre d'un système de navigation par satellites selon l'une des revendications 4 à 7, caractérisé en ce que des bases de temps et de fréquence de systèmes de navigation existants sont employées, dans les satellites du système de navigation par satellites, pour effectuer le repérage coopératif ou non coopératif des correspondants.

9. Procédé de mise en oeuvre d'un système de navigation par satellites selon l'une des revendications 1 à 7, caractérisé en ce que des bases de temps et de fréquence de systèmes de navigation existants sont employées, dans les satellites du système de navigation par satellites, pour effectuer l'étalonnage des bases de temps et de fréquence embarquées.

10. Procédé de mise en oeuvre d'un système de navigation par satellites selon l'une des revendications précédentes, caractérisé en ce qu'un repérage non coopératif dans des systèmes composés de satellites placés sur des orbites à basse altitude est réalisé, par le correspondant, par l'analyse du décalage de fréquence Doppler des signaux étalonnés envoyés par des satellites traversant à une fréquence élevée, sur des orbites différents, la zone de couverture du correspondant.
